**Europäisches Patentamt**

**European Patent Office**

**Office européen des brevets**

(19)

(11) Veröffentlichungsnummer: **0 348 774**

**A2**

(12) # EUROPÄISCHE PATENTANMELDUNG

(21) Anmeldenummer: **89111064.5**

(22) Anmeldetag: **19.06.89**

(51) Int. Cl.⁴: **G11B 31/00 , H04B 1/20**

(30) Priorität: **28.06.88 DE 3821751**
**07.06.89 DE 3918578**

(43) Veröffentlichungstag der Anmeldung:
**03.01.90 Patentblatt 90/01**

(84) Benannte Vertragsstaaten:
**AT BE DE ES FR GB IT LU NL**

(71) Anmelder: **NOKIA**
**UNTERHALTUNGSELEKTRONIK**
**(DEUTSCHLAND) GMBH**
**Östliche Karl-Friedrich-Strasse 132**
**D-7530 Pforzheim(DE)**

(72) Erfinder: **Apitz, Siegfried**
**L.-Windhorst-Strasse 24**
**D-7530 Pforzheim(DE)**
Erfinder: **Maier, Hermann**
**Rennbahnstrasse 6**
**D-7590 Achern(DE)**

(54) **Gerätesystem aus wenigstens zwei drahtlos fernbedienbaren Geräten der Unterhaltungselektronik.**

(57) Ein aus wenigstens zwei Geräten (5,7) der Unterhaltungselektronik bestehendes Gerätesystem enthält enthält einen Fernbedienungsgeber (1) mit einer ersten Tastengruppe (2) zur Bedienung eines dem Fernbedienungsgeber(1) zugeordneten Videorecorders (5) und mit einer zweiten Tastengruppe (3) zur Fernbedienung eines mit dem Videorecorder (5) zusammenarbeitenden Fernsehgerätes (7), dessen Fernbedienungsempfangsteil (9) mit einem anderen, nicht mit dem Fernbedienungsübertragungssystem (S0) des Fernbedienungsempfangsteiles (8) des Videorecorders kompatiblen Fernbedienungsübertragungssystem (S3) arbeitet. Um dies zu ermöglichen enthält der Fernbedienungsgeber (1) eine größere Anzahl Systemdatenspeicher (20 bis 24) und den Systemdatenspeichern zugeordnete Befehlscodewandler 10, 13 bis 18. In einer Markieranordnung (30) schaltet eine gesetzte Markierstelle (31.5) den ihr zugeordneten Systemdatenspeicher (23) und den dieser Markierungsstelle zugeordneten Befehlscodewandler (13) mit einer Ablaufsteuerschaltung (25) derart zu einer Fernsteuerschaltung zusammen, daß die Ablaufsteuerschaltung (25) beim Betätigen einer der Bedienungselemente (4) der Tastengruppe 2) ein Fernbedienungssignal (38) des eingestellten Fernbedienungsübertragungssystemes (S3) erzeugt.

FIG. 2

# Gerätesystem aus wenigstens zwei drahtlos fernbedienbaren Geräten der Unterhaltungselektronik

Die Erfindung betrifft ein Gerätesystem gemäß dem Oberbegriff des Anspruches 1.

In vielen Haushalten nimmt die Zahl derartiger drahtlos fernbedienbarer elektrischer Geräte immer weiter zu, wobei die Übertragungssysteme, über die diese Geräte fernbedienbar sind, so unterschiedlich sind, daß sie über unterschiedliche Fernbedienungsgeber fernbedient werden müssen. Damit wird die Anzahl der in einem Haushalt befindlichen Fernbedienungsgeber schnell so groß, daß die Zuordnung der Fernbedienungsgeber zu den einzelnen fernbedienbaren Geräten nicht mehr überschaubar ist. Hinzu kommt, daß bei der Benutzung von Geräten der Unterhaltungselektronik mehrere Geräte miteinander korrespondieren und ein Gerätesystem bilden, in dem diese Geräte nebeneinander bedient werden müssen. Ein derartiges Gerätesystem besteht beispielsweise bei der Wiedergabe einer Aufzeichnung eines Videobandes, bei der ein Videorecorder mit einem Fernsehgerät verbunden ist, und bei der beide Geräte zur Einstellung der Wiedergabe nebeneinander bedient werden müssen. Es ist zwar aus den Zeitschriften Funkschau 1985, Heft 18, Seiten 54 bis 58 und Funkschau 1986, Heft 14, Seiten 42 bis 44 bekannt, ein aus einem Fernsehgerät und einem Videorecorder gebildetes Gerätesystem eines Herstellers mit einem einzigen Fernbedienungsgeber zu betätigen. Sind jedoch die nebeneinander fernzubedienenden, miteinander kommunizierenden Geräte eines Gerätesystemes Geräte unterschiedlicher Fabrikate mit unterschiedlichen Übertragungssystemen für die Fernbedienung, muß jedes dieser Geräte mit dem ihm zugehörigen Fernbedienungsgeber oder direkt am Gerät an der Ortsbedienung entsprechend den Bedienungswünschen des Benutzers eingestellt werden.

Der Erfindung liegt deshalb die Aufgabe zugrunde, eine Möglichkeit zu schaffen, mit der wenigstens zwei in einem Gerätesystem zusammengefaßte und nebeneinander fernzubedienende elektrische Geräte der Unterhaltungselektronik unterschiedlicher Fernbedienungsübertragungssysteme dennoch mit einem einzigen Fernbedienungsgeber nebeneinander bedient werden können. Diese Aufgabe wird nach der Erfindung durch die im kennzeichnenden Teil des Anspruches 1 angegebenen Merkmale gelöst.

In einem Gerätesystem nach der Erfindung sind die gängigsten Fernbedienungsübertragungssysteme einprogrammiert. Damit ist ein aus mehreren handelsüblichen Geräten der Unterhaltungselektronik gebildetes Gerätesystem in einfacher Weise auf die Fernbedienung dieser Geräte mit nur einer Fernbedienung eingerichtet, auch dann, wenn diese Geräte mit unterschiedlichen, nicht kompatiblen Fernbedienungsübertragungssystemen arbeiten. Die Einstellung des Gerätesystems auf die Fernbedienung bestimmter, im Haushalt eines Benutzers befindlicher und zu einem Gerätesystem zusammengestellter handelsüblicher Geräte ist auch für den technisch weniger geübten Benutzer in einfacher Weise mit wenigen Handgriffen durchführbar.

In einer vorteilhaften Ausgestaltung der Erfindung sind die für die einstellbare oder programmierbare Fernsteuerschaltung erforderlichen zusätzlichen Schaltungen und Speicher ausschließlich im Fernbedienungsgeber angeordnet. Damit ist die Einrichtung, Geräte mit unterschiedlichen Fernbedienungsübertragungssystemen fernzubedienen, ausschließlich im Fernbedienungsgeber angeordnet. In diesem Fall können alle handelsüblichen Geräte der Unterhaltungselektronik, deren Fernbedienungsübertragungssystem und Fernbedienungscode im Fernbedienungsgeber gespeichert ist, mit dem einen Fernbedienungsgeber des Gerätesystems fernbedient werden, sobald im Fernbedienungsgeber zusätzlich das entsprechende Fernbedienungsübertragungssystem und der entsprechende Fernbedienungscode wirksam geschaltet ist.

Soll jedoch der Umfang der möglichen Auswahl der mit einem Fernbedienungsgeber fernzubedienenden handelsüblichen Geräte der Unterhaltungselektronik relativ groß sein, so daß der erforderliche Umfang der zusätzlichen Schaltungen nicht mehr in einem Fernbedienungsgehäuse untergebracht werden kann, sind in einer weiteren vorteilhaften Ausbildung der Erfindung diese zusätzlichen Schaltungen in einem der Geräte der Unterhaltungselektronik des Gerätesystemes untergebracht. Diesem Gerät ist dann der Fernbedienungsgeber des Gerätesystemes zugeordnet. Dieses Gerät wertet entsprechend einem zusätzlichen Kennungssignal zum Fernbedienungsbefehl die von ihm empfangenen Fernbedienungssignale selbst aus oder setzt sie in Befehle des voreingestellten Fernbedienungsübertragungssystems um und sendet sie draht gebunden oder drahtlos an die anderen Geräte der Unterhaltungselektronik des Gerätesystemes aus. Die anderen (Geräte des Gerätesystemes sind ebenfalls handelsübliche Geräte der Unterhaltungselektronik. Sie enthalten jedoch keine weiteren zusätzlichen Einrichtungen für die Fernbedienung anderer Geräte des Gerätesystems.

Die Anwahl der fernzubedienenden Geräte eines derartigen Gerätesystems erfolgt entweder über unterschiedliche Tastengruppen des Fernbedienungsgebers oder über zusätzlich auf dem Fernbedienungsgeber angeordnete besondere Bedienungselemente zur Auswahl des fernzubedienenden Gerätes der Unterhaltungselektronik.

Die vorgenannten und weitere vorteilhafte Ausgestaltungen der Erfindung sind in den Unteransprüchen angegeben. Insbesondere sind die Einstellelemente zur Einstellung des gewünschten Fernbedienungsübertragungssystemes so ausgestaltet, daß diese Einstellung zwar in einfacher Weise, aber bewußt und gezielt vorgenommen werden muß und nicht versehentlich durch eine Falschbedienung des Fernbedienungsgebers verändert werden kann.

Die Erfindung wird nachfolgend anhand einiger vorteilhafter Ausführungsbeispiele näher erläutert. In der zugehörigen Zeichnung zeigen

Fig. 1 und Fig. 2 je eine Blockdarstellung eines Gerätesystems mit zwei Geräten der Unterhaltungselektronik und einem diese Geräte steuernden, in Funktionsblöcken dargestellten Fernbedienungsgeber

Fig. 3 und Fig. 4 je eine Blockdarstellung eines Gerätesystems mit zwei von einem Fernbedienungsgeber fernbedienbaren Geräten der Unterhaltungselektronik, von denen eines der beiden Geräte die vorprogrammierbare Fernsteuerschaltung für das andere Gerät enthält.

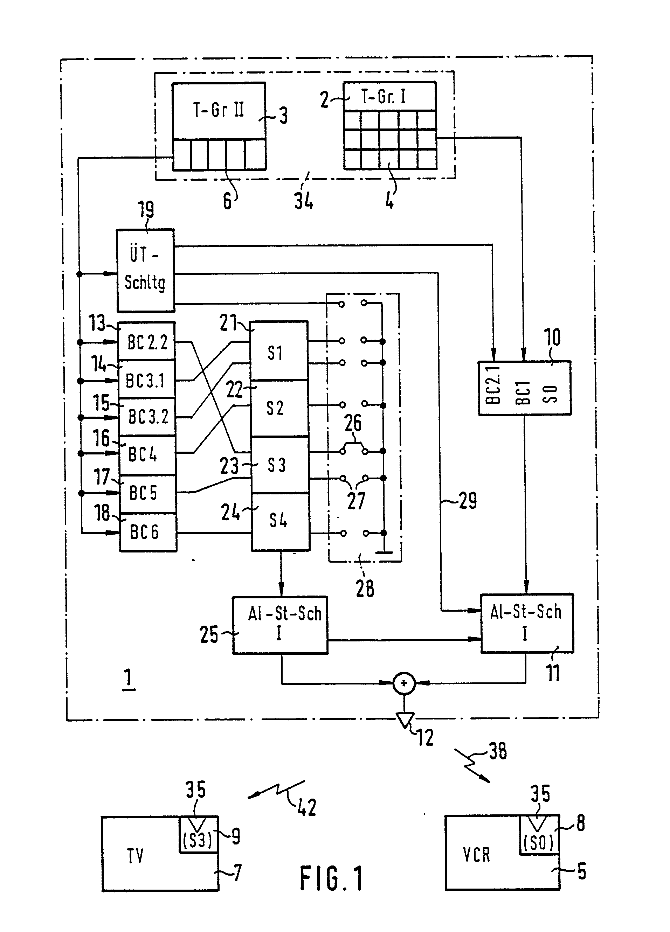

In Figur 1 sind die beiden Geräte 5 und 7 der Unterhaltungselektronik als Geräteblöcke und ein zugehöriger Fernbedienungsgeber 1 als Blockschaltbild dargestellt. Die Geräte 5 und 7 bilden mit dem Fernbedienungsgeber 1 ein Gerätesystem, das durch den Fernbedienungsgeber 1 fernbedient werden kann. Der Fernbedienungsgeber 1 enthält auf einem Bedienungsfeld 34 zwei Tastengruppen 2 und 3. Die erste Tastengruppe 2 umfaßt Bedienungselemente 4 zur Fernbedienung des ersten Gerätes 5 der Unterhaltungselektronik, im dargestellten Ausführungsbeispiel eines Videorecorders. Die zweite Tastengruppe 3 umfaßt Bedienungselemente 6 zur Bedienung des zweiten fernbedienbaren Gerätes 7 der Unterhaltungselektronik, im dargestellten Ausführungsbeispiel eines Fernsehempfängers eines anderen Herstellers als dem Hersteller des Videorecorders 5. Dementsprechend sind die Fernbedienungsempfangteile 8 und 9 der beiden Geräte 5 und 6 Bestandteile unterschiedlicher Fernbedienungssysteme.

An die erste Tastengruppe 2 ist ein Systemdatenspeicher und Befehlscodespeicher 10 angeschlossen, der sowohl den Befehlscode als auch die Systemdaten des Fernbedienungsübertragungssystems S0 des dem Fernbedienungsgeber zugeordneten Videorecorders 5 enthält und der für ein in der ersten Tastengruppe 2 betätigtes Bedienungselement 4 den zugehörigen Befehlscode an eine Ablaufsteuerschaltung 11 überträgt und den Programmablauf dieser Steuerschaltung in Gang setzt. Die Ablaufsteuerschaltung 11 erzeugt daraus die Fernbedienungssignale 38 des Fernbedienungsübertragungssystemes S0, das im Fernbedienungsempfangteil 8 des Videorecorders 5 installiert ist, und überträgt diese Fernbedienungssignale entsprechend diesem Fernbedienungsübertragungssystem über ein Senderelement 12 an ein Empfangselement 35 der beiden fernbedienbaren Geräte 5 und 7 der Unterhaltungselektronik.

Die Tastenelemente 6 der zweiten Tastengruppe 3 des Fernbedienungsgebers 1 sind mit den Eingängen einer Reihe zusätzlicher Befehlscodewandler 13 bis 18 und einer Übertragungsschaltung 19 verbunden. Jeder dieser zusätzlichen Befehlscodewandler 13 bis 18 enthält einen den Bedienungselementen 6 der zweiten Tastengruppe 3 zugeordneten Satz von Befehlscodes BC2.2 bis BC6. Die einzelnen Befehlscodewandler 13 bis 18 sind zusätzlichen Systemdatenspeichern 21 bis 24 zugeordnet. Je einer dieser Systemdatenspeicher enthält die Systemdaten und die Programmablaufdaten eines bestimmten Fernbedienungsübertragungssystemes S1 bis S4, die für die Steuerung einer zweiten Ablaufsteuerschaltung 25 erforderlich sind, damit die zweite Ablaufsteuerschaltung 25 daraus die Fernbedienungssignale des betreffenden Fernbedienungsübertragungssystemes bilden kann. Die Auswahl, welcher der zusätzlichen Systemdatenspeicher S1 bis S4 und gegebenenfalls welcher dem ausgewählten zusätzlichen Systemdatenspeicher zugeordnete zusätzliche Befehlscodewandler mit der zweiten Ablaufsteuerschaltung 25 in einer Fernsteuerschaltung zusammenarbeiten soll, wird durch eine Lötbrücke 26 zwischen den Auswahlkontakten 27 einer Lötbrückenanordnung 28 getroffen. Im dargestellten Ausführungsbeispiel wird der zusätzliche Systemdatenspeicher 23 für das Fernbedienungsübertragungssystem S3 und der zusätzliche Befehlscodewandler 13 mit dem Befehlscodesatz BC2.2 mit der zweiten Ablaufsteuerschaltung 25 zu einer Fernsteuerschaltung wirksam geschaltet. Bei dieser Einstellung kann ein Benutzer des Fernbedienungsgebers nebeneinander mit nur einem einzigen Fernbedienungsgeber sowohl den fernbedienbaren Videorecorder 5 als auch den fernbedienbaren Fernseher 7 entsprechend seinen Wünschen fernbedienen.

Arbeitet der Fernbedienempfänger 9 des Fernsehgerätes 7 nach dem gleichen Fernbedienungsübertragungssystem S0 wie das Fernbedienungsempfangteil 8 des Videorecorders 5 und sollen beide Geräte mit dem gleichen Fernbedienungsgeber bedient werden, dann wird die Übertragungsschaltung 19 in dem Fernbedienungsgeber mit einer Lötbrücke in der Lötbrückenanordnung 28 wirksam geschaltet. In diesem Fall werden die Tastensignale der in der zweiten Tastengruppe 3 bedienten Bedienungselemente von der Übertragungsschaltung 19 unmittelbar an den Systemdatenspeicher und Befehlscodespeicher 10 für das Fernbedienungsübertragungssystem S0 des Videorecorders 5 übertragen. Außerdem wird über eine Verbindung 29 der Programmablauf in der Ablaufsteuerschaltung 11 so eingestellt, daß die von der Ablaufsteuerschaltung 11 erzeugten Fernbedienungssignale ein Adressensignal enthalten, das nur den Fernbedienungsempfangsteil 9 des Fernsehgerätes 7 wirksam schaltet.

Einigen zusätzlichen Systemdatenspeichern (S1, S3) sind mehr als ein zusätzlicher Befehlscodewandler zugeordnet. Dies ist dann der Fall, wenn Geräte der Unterhaltungselektronik mit dem gleichen Fernbedienungsübertragungssystem arbeiten, die jedoch infolge der unterschiedlichen Fabrikate der Geräte oder der Weiterentwicklung der Geräte Tabellen mit unterschiedlichen Befehlscodes für die gleichen Befehle enthalten.

Die Lötbrückanordnung 28 ist verdeckt und beispielsweise ber das Batteriefach zugänglich im Fernbedienungsgeber 1 angebracht. Sie dient dazu, für die zweite Tastengruppe 3 die entsprechende Fernsteuerschaltung auszuwählen und mit einer Lötbrücke 26 zu markieren und damit einzustellen. Im dargestellten Ausführungsbeispiel ist durch die Lötbrücke 26 der zusätzliche Systemdatenspeicher 23 mit dem Befehlscodewandler 13 markiert, so daß diese beiden Schaltungen mit der zweiten Ablaufsteuerschaltung 25 eine Fernsteuerschaltung bilden, die die ausgewählten Fernbedienungssignale des Befehlscodes BC2.2 im gewünschten Fernbedienungsübertragungssystem S3 erzeugt. In der Lötbrückenanordnung 28 darf immer nur eine Lötbrücke hergestellt sein. In einem anderen Ausführungsbeispiel des Fernbedienungsgebers kann als Markierungsanordnung anstelle einer Lötbrückenanordnung ein Schiebeschalter verwendet werden.

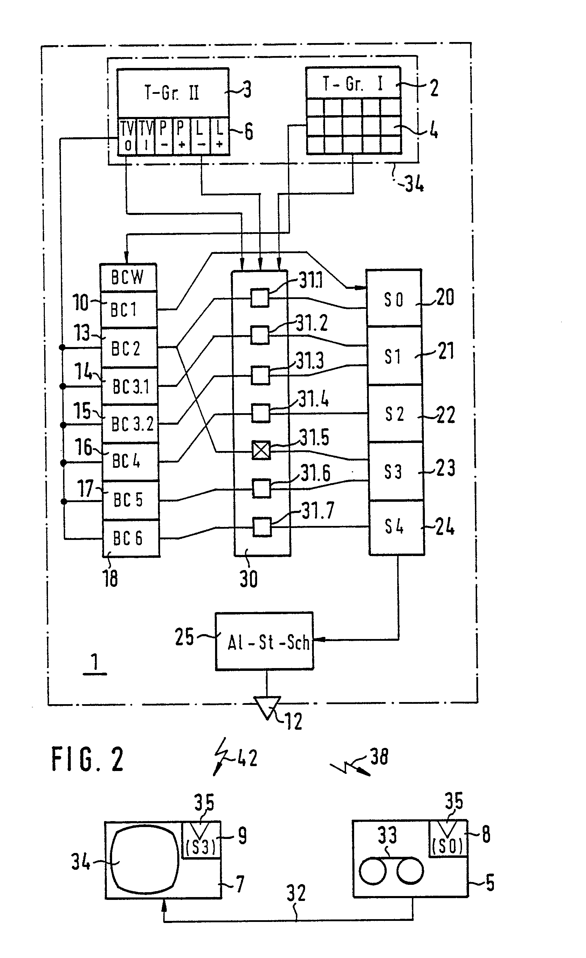

Bei dem in Figur 2 dargestellten Ausführungsbeispiel eines Gerätesystems sind für die mit dem in Figur 1 dargestellten Ausführungsbeispiel übereinstimmenden Schaltungsblöcke die gleichen Bezugszeichen verwendet. Der in Figur 2 dargestellte Ferrnbedienungsgeber 1 unterscheidet sich von dem in Figur 1 dargestellten Fernbedienungsgeber 1 im wesentlichen darin, daß er nur eine Ablaufsteuerschaltung 25 enthält, daß er außerdem einen vom Befehlscodespeicher 10 getrennten Systemdatenspeicher 20 enthält, in dem die Programmablaufdaten und Systemdaten des Fernbedienungsübertragungssystems S0 des Videorecorders 5 gespeichert sind, und daß er als Markierungsanordnung einen Zuordnerspeicher 30 enthält, der für jede Markierungsstelle eine Zuordnerspeicherstelle (31.1 bis 31.7) enthält. Mit einer markierten Zuordnerspeicherstelle (31.5) wird der dieser Zuordnerspeicherstelle zugeordnete zusätzliche Systemdatenspeicher 23 und der dieser Zuordnerspeicherstelle zugeordnete zusätzliche Befehlscodewandler 13 zu einer Fernsteuerschaltung wirksam geschaltet, so daß beim Betätigen eines der Bedienungselemente 6 oder 4 der Tastengruppen 2 oder 3 die aus der Ablaufsteuerschaltung 25, dem markierten Befehlscodewandler 13 und dem markierten Systemdatenspeicher 23 gebildete Fernsteuerschaltung in Gang gesetzt wird und die Ablaufsteuerschaltung 25 aus den Daten dieser Fernsteuerschaltung das entsprechende Fernbedienungssignal bildet.

Zur Programmierung des Zuordnerspeichers 30 werden im dargestellten Ausführungsbeispiel die Bedienungselemente TV0 und Lder zweiten Tastengruppe gleichzeitig betätigt und während der Betätigung dieser beiden Bedienungselemente die zu markierende Zuordnerspeicherstelle 31.5 durch Betätigen eines bestimmten Bedienungselementes der ersten Tastengruppe gesetzt. Für diese Art der Programmierung sind somit keine zusätzlichen Einstellelemente auf dem Fernbedienungsgeber erforderlich. Der Zuordnerspeicher 30 ist im dargestellten Ausführungsbeispiel ein nicht flüchtiger Speicher, dessen programmierte Zuordnung auch bei einem Batteriewechsel am Fernbedienungsgeber erhalten bleibt und nur durch eine neue Einstellung entsprechend des Programmes geändert wird.

Die beiden in Figur 2 dargestellten fernbedienbaren Geräte 5 und 7 sind durch ein Kabel 32 miteinander verbunden, über das bei einer Wiedergabe der auf einer Videocassette 33 aufgezeichneten Videosendung die Videosignale zum Fernseher 7 gelangen, auf dessen Bildschirm 34 die auf der Videocassette 33 aufgezeichnete Videosendung wiedergegeben wird. Im Ausführungsbeispiel der Figur 2 enthält die für die Bedienung des Fernsehers 7 vorgesehene Tastengruppe 3 nur die für eine Bedienung des Fernsehgerätes 7 im Zusammenwirken mit dem Videorecorder 5 unbedingt notwendigen Tasten. Dadurch bleibt das Bedienungsfeld 34 des Fernbedienungsgebers 1 für den Benutzer des Fernbedienungsgebers übersichtlich.

Der Befehlscodespeicher 10 und die zusätzlichen Befehlscodewandler 13 bis 18, der Systemdatenspeicher 20, die zusätzlichen Systemdatenspeicher 21 bis 24, die Ablaufsteuerschaltung 25 und der Zuordnerspeicher 30 sind in einem besonders vorteilhaften Ausführungsbeispiel des in Figur 2 dargestellten Fernbedienungsgebers Bestandteile eines Mikroprozessors. Entsprechendes gilt für die Baugruppen 13 bis 25 des in Figur 1 dargestellten Ausführungsbeispieles eines Fernbedienungsgebers 1.

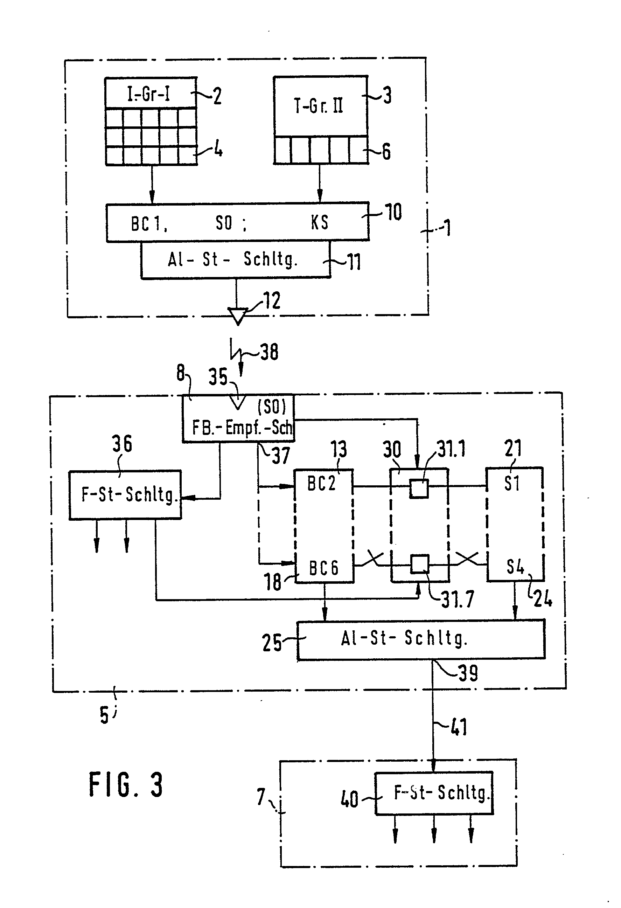

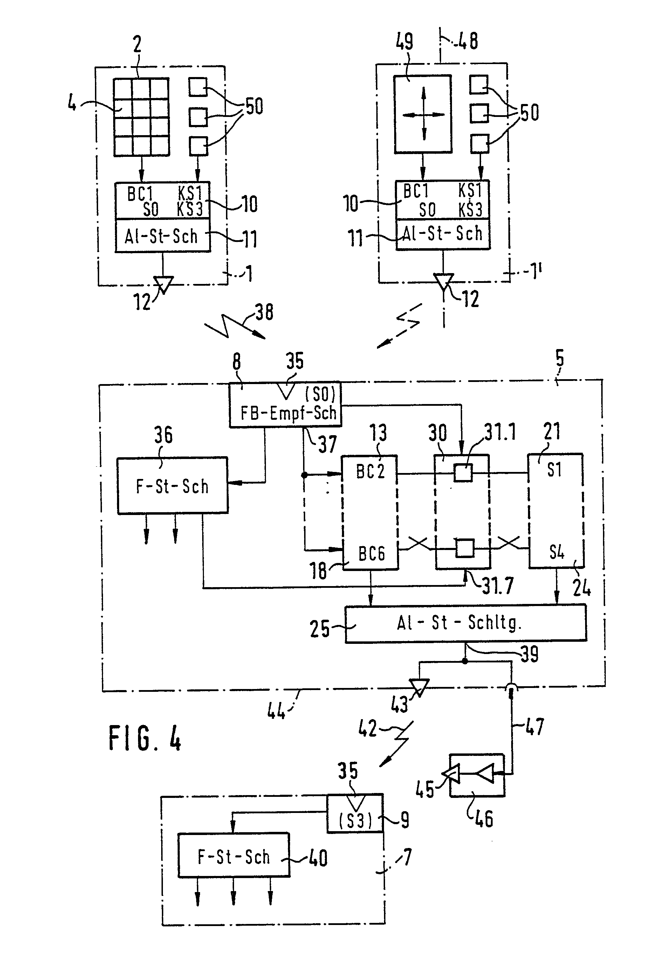

Bei den in den Figuren 3 und 4 in Geräteblöcken und Funktionsblöcken dargestellten Ausführungsbeispielen eines aus zwei Geräten 5 und 7 der Unterhaltungselektronik und einem für die Fernbedienung vorgesehenen Fernbedienungsgeber 1 bestehenden Gerätesystem sind die zweite Ablaufsteuerschaltung 25 und die zusätzlichen Systemdatenspeicher und die zusätzlichen Befehlscodewandler nicht im Fernbedienungsgeber, sondern in einem der Geräte der Unterhaltungselektronik des Gerätesystems angeordnet. Dies hat den Vorteil, daß ein größerer Umfang an zusätzlichen Systemdatenspeichern und zusätzlichen Befehlscodewandlern untergebracht werden kann.

Bei dem in Figur 3 dargestellten Ausführungsbeispiel eines derartigen Gerätesystems sind die zweite Ablaufsteuerschaltung 25, die zusätzlichen Befehlscodewandler 13 bis 18 und die zusätzlichen Systemdatenspeicher 21 bis 24 und der Zuordnerspeicher 30 im Videorecorder 5 angeordnet. Der zugehörige Fernbedienungsgeber 1 enthält ein erstes Tastenfeld 2 mit den Bedienungselementen 4 zur Fernbedienung des Videorecorders 5 und ein zweites Tastenfeld 3 zur Bedienung des Fernsehgerätes 7 in bestimmten, im Verbund mit dem Videorecorder erforderlichen Betriebszuständen. Zur Unterscheidung, welches der beiden Geräte 5 oder 7 gerade fernbedient wird, erhalten die vom zweiten Tastenfeld 3 abgerufenen Fernbedienungsbefehle ein Kennungssignal KS, das in der aus dem Befehlscodespeicher und Systemdatenspeicher 10 und der Ablaufsteuerschaltung 11 gebildeten Fernsteuerschaltung des Fernbedienungsgebers 1 erzeugt wird.

Das Fernbedienungsempfangsteil 8 des Videorecorders 5, das die Fernbedienungsbefehle aus dem drahtlos übertragenen Fernbedienungssignal trennt, überträgt die mit dem ersten Tastenfeld 2 abgerufenen Fernbedienungsbefehle an eine Funktionssteuerschaltung 36 des Videorecorders 5 zur Einstellung der entsprechenden Videorecorderfunktionen. Die über die Bedienungselemente 6 des zweiten Tastenfeldes 3 des Fernbedienungsgebers 1 abgerufenen Fernbedienungssignale für den Fernseher 7 gelangen von einen Signalausgang 37 des Fernbedienungsempfangsteils 8 des Videorecorders an die Eingänge der zusätzlichen Befehlscodewandler 13 bis 18 und lösen an dem über dem Zuordnerspeicher 30 markierten Befehlscodewandler einen Befehlscode aus, der dem aufgerufenen Fernbedienungsbefehl für den Fernseher 7 entspricht und der am Signalausgang 39 der Ablaufsteuerschaltung 25 einen für die Funktionssteuerschaltung 40 des Fernsehers verständlichen Fernsteuerbefehl mit dem gewünschten Befehlsinhalt erzeugt. Dieser Fernsteuerbefehl gelangt in dem dargestellten Ausführungsbeispiel über eine Signalleitung 41 eines nicht näher dargestellten Kabels an den Signaleingang der Funktionssteuerschaltung 40 des Fernsehers 7, der dadurch in den gewünschten Betriebszustand gesteuert wird.

Das in Figur 4 dargestellte Ausführungsbeispiel eines zwei Geräte 5 und 7 der Unterhaltungselektronik enthaltenden Gerätesystems unterscheidet sich von dem in Figur 3 dargestellten Ausführungsbeispiel eines Gerätesystems im wesentlichen nur dadurch, daß die Ablaufsteuerschaltung 25 der außerdem aus dem markierten Befehlscodewandler und dem markierten Systemdatenspeicher gebildeten Fernsteuerschaltung des Videorecorders 5 an ihrem Ausgang ein Fernbedienungssignal 42 erzeugt, das drahtlos an das Fernbedienungsempfangsteil 9 des Fernsehers 7 übertragen wird. Dieses Fernbedienungsempfangsteil 9 überträgt die mit dem Fernbedienungssignal empfangenen Fernbedienungsbefehle an die Funktionssteuerschaltung 40 des Fernsehers 7 zur Einstellung der entsprechenden Betriebsabläufe oder Betriebswerte des Fernsehers 7. Die drahtlose Übertragung der Fernbedienungssignale zwischen den beiden Geräten 5 und 7 der Unterhaltungselektronik erfolgt entweder über ein Sendeelement 43, das unmittelbar in der Gehäusewand 44 des Videorecorders 5 angebracht ist oder über ein Sendeelement 45 einer Sendeeinrichtung 46, die über ein Kabel 47 mit dem Videorecorder 5 verbunden ist. Im letzteren Fall kann das Sendeelement 45 am leichtesten in die günstigste Übertragungsposition zum anderen Gerät oder zu den anderen Geräten des Gerätesystems eingestellt werden.

Bei dem in Figur 4 dargestellten Ausführungsbeispiel enthält der Fernbedienungsgeber 1, mit dem die Geräte 5 und 7 fernbedient werden, nur eine Tastengruppe 2, oder in einem alternativ dazu dargestellten Ausführungsbeispiel eines Fernbedienungsgeber 1′ einen mittels der Winkelablage einer Hauptachse 48 des Fernbedienungsgebers 1′ von einer bestimmten Normalrichtung gesteuerten Befehlsgeber 49. Die Zuordnung der Tastengruppe 2 oder des Befehlsgebers 49 zu den einzelnen fernzubedienenden Geräten des Gerätesystems wird vom Benutzer durch Betätigen bestimmter Auswahlbedienungselemente 50 bestimmt. Das betätigte Element der Auswahlbedienungselemente 50 lösten im Befehlscodespeicher und Systemdatenspeicher 10 des Fernbedienungsgebers 1 beziehungsweise 1′ ein entsprechendes Kennungssignal KS1, KS2 oder KS3 aus, das das Gerät des Gerätesystems kennzeichnet, das gerade fernbedient wird und das mit dem Fernbedienungsbefehl mit dem im Fernbedienungsgeber erzeugten Fernbedienungssignal 38 an das Fernbedienungsempfangsteil 8 des Videorecorders 5 zur Weiterverarbeitung übertragen wird.

## Ansprüche

1. Gerätesystem, bestehend aus wenigstens zwei drahtlos fernbedienbaren elektrischen Geräten der Unterhaltungselektronik und einem Fernbedienungsgeber zur drahtlosen Fernbedienung dieser Geräte mittels jeweils einem dieser Geräte zuordenbaren Tastengruppe des Fernbedienungsgebers, mit einer durch Bedienungselemente der Tastengruppe startbaren Fernsteuerschaltung zur Bildung eines über ein Sendeelement übertragbaren Fernbedienungssignals, das einen über ein Bedienungselement der Tastengruppe in einem Befehlscodespeicher ausgelösten Fernbedienungsbefehl enthält,
dadurch gekennzeichnet,

- daß wenigstens einer der zuordenbaren Tastengruppen (2, 3) mehrere zusätzliche Systemdatenspeicher (21 bis 24) zugeordnet sind, von denen jeder die Programmablaufdaten und Speicherdaten eines Fernbedienungsübertragungssystems voneinander verschiedender Fernbedienungsübertragungssysteme (51 bis 54) enthält,
- daß dieser Tastengruppe (3) bzw. diesen Tastengruppen mehrere zusätzliche Befehlscodewandler (13 bis 18) zugeordnet sind,
- daß ein Zuordenspeicher (28,30) markierbare Zuordnungselemente (27, 31) enthält, von denen jedes einem Systemdatenspeicher und/oder einem Befehlscodewandler zugeordnet ist und von denen ein bestimmtes, ausgewähltes Zuordnungselement (27, 31,5) durch ein Markierelement (26) markiert ist,
- und daß mittels des durch das Markierungselement markierten Zuordnungselementes der diesem zugeordnete Systemdatenspeicher (23) und der diesem zugeordnete Befehlscodewandler (13) mit einer Ablaufsteuerschaltung (25) zur Erzeugung von Fernbedienungssignalen (38, 42) zu einer Fernsteuerschaltung wirksam geschaltet ist.

2. Gerätesystem nach Anspruch 1, dadurch gekennzeichnet, daß die zusätzlichen Systemdatenspeicher (21 bis 24) und die zusätzlichen Befehlscodewandler (13 bis 18) der Zuordenspeicher (28, 30) und die Ablaufsteuerschaltung (25), mit der die zusätzlichen Speicher wirksam schaltbar sind, im Fernbedienungsgeber (1) angeordnet sind.

3. Gerätesystem nach Anspruch 2, dadurch gekennzeichnet, daß die Ablaufsteuerschaltung (25), mit der die zusätzlichen Systemdatenspeicher (21 bis 23) und Befehlscodewandler (13 bis 18) wirksam schaltbar sind, die Ablaufsteuerschaltung des Fernbedienungsgebers (1) ist.

4. Gerätesystem nach Anspruch 1, dadurch gekennzeichnet, daß wenigstens dem Fermbedienungsempfänger (8) eines der Geräte (5) des Gerätesystems die zusätzlichen Befehlscodewandler (13 bis 18) nachgeschaltet sind und dieses Gerät die zusätzlichen Systemdatenspeicher (21 bis 28), den Zuordnungsspeicher (30) und die Ablaufsteuerschaltung (25), mit der die markierten zusätzlichen Speicher wirksam geschaltet sind, enthält,
- daß die Fernbedienungsbefehle, die in den Fernbedienungssignalen (38) der Fernbedienung (1) enthalten sind und einem der zusätzlichen Befehlscodewandler zugeordnet sind, eine Zuordnungskennung (KS) enthalten - und daß der Fernbedienungsempfänger die mit einer Zuordnungskennung versehenen Fernbedienungsbefehle an den markierten Befehlscodewandler (13) überträgt, der die Ablaufsteuerschaltung (25) zusammen mit dem durch das markierte Zuordnungselement (31.5) des Zuordnungsspeichers (30) markierten Systemdatenspeicher (23) zur Bildung entsprechender über ein Sendeelement (43) an das andere Gerät (7) oder eines der anderen Geräte des Gerätesystems übertragbarer Fernbedienungssignale (42) wirksam schaltet.

5. Gerätesystem nach Anspruch 4, dadurch gekennzeichnet, daß das Sendeelement zur Übertragung eines Fernbedienungsbefehls von einem Gerät (5) zu einem anderen Gerät (7) des Gerätesystems eine Signalleitung (41) eines die beiden Geräte verbindenden Kabels oder ein akustisches oder optisches Senderelement (43, 45) ist, das unmittelbar in einer Außenwand (44) des ersten Gerätes (5) oder in einer über ein Kabel (47) mit diesem Gerät verbundenen Sendeeinrichtung (46) angebracht ist.

6. Gerätesystem nach einem der vorhergehenden Ansprüche, dadurch gekennzeichnet, daß der Fernbedienungsgeber (1) eine Tastengruppe (2) und zusätzliche Auswahlbedienungselemente (50) enthält, die in betätigtem Zustand die Tastengruppe dem dem betätigten Auswahlbedienungselement zugeordneten Gerät des Gerätesystems zuordnet.

7. Gerätesystem nach einem der Ansprüche 1 bis 6, dadurch gekennzeichnet, daß der Fernbedienungsgeber (1') anstelle einer Tastengruppe (2) einen mittels der Winkelablage einer Hauptachse (48) des Fernbedienungsgebers von einer bestimmten Normalrichtung gesteuerten Befehlsgeber (49) enthält.

8. Gerätesystem nach einem der vorhergehenden Ansprüche, dadurch gekennzeichnet, daß die markierbaren Zuordnungselemente des Zuordnungsspeichers (28) eine verdeckt angeordnete Lötbrückenanordnung oder Steckerbrückenanordnung (27) ist, in der ein Zuordnungselement durch eine Lötbrücke oder Steckerbrücke (26) markiert ist.

9. Gerätesystem nach einem der Ansprüche 1 bis 7, dadurch gekennzeichnet, daß der Zuordnungsspeicher ein mehrstelliger Zustandsspeicher (30) ist, dessen Speicherzustand, nämlich dessen Markierung eines Zuordnungselementes (31.1 bis 31.5) in einer Grundprogrammiereinstellung des Gerätesystems mittels einer bestimmten Taste oder einer bestimmten Tastenkombination des Fernbedienungsgebers (1) einstellbar ist.

FIG.1

FIG. 2

FIG. 3

FIG. 4